Europäisches Patentamt

European Patent Office

Office européen des brevets

(11) Veröffentlichungsnummer : **0 162 955 B1**

# EUROPÄISCHE PATENTSCHRIFT

(45) Veröffentlichungstag der Patentschrift :
20.09.89

(21) Anmeldenummer : 84114450.4

(22) Anmeldetag : 29.11.84

(51) Int. Cl.⁴ : **B 23 D 23/00**

(54) Profil- und/oder Stab- und/oder Flachstahlschere.

(30) Priorität : 18.05.84 DE 3418423

(43) Veröffentlichungstag der Anmeldung :
04.12.85 Patentblatt 85/49

(45) Bekanntmachung des Hinweises auf die Patenterteilung : 20.09.89 Patentblatt 89/38

(84) Benannte Vertragsstaaten :
AT BE CH DE FR GB IT LI LU NL SE

(56) Entgegenhaltungen :
DE—A— 2 220 043
DE—A— 3 107 199
DE—B— 2 150 542

(73) Patentinhaber : Firma Muhr und Bender
Kölner Strasse 99
D-5952 Attendorn (DE)

(72) Erfinder : Muhr, Karl-Heinz, Dr. Ing.
In der Stesse 2
D-5952 Attendorn (DE)

(74) Vertreter : Gesthuysen, Hans Dieter, Dipl.-Ing. et al
Patentanwälte Gesthuysen + von Rohr Huyssenallee
15 Postfach 10 13 33
D-4300 Essen 1 (DE)

EP 0 162 955 B1

Jouve, 18, rue St-Denis, 75001 Paris, France

## Beschreibung

Die Erfindung betrifft eine Profil- und/oder Stab- und/oder Flachstahlschere mit einem — vorzugsweise aus zwei Körperplatten bestehenden — Maschinenkörper, mit einem Scherenkörper, mit einem Arbeitsschlitten, mit zwei feststehenden Messern und mit zwei durch den Arbeitsschlitten beweglichen Messern, wobei die feststehenden Messer und die beweglichen Messer im Scherenkörper angeordnet sind und der Scherenkörper von einer ersten Scherposition in eine zweite Scherposition derart bewegbar ist, daß in jeder Scherposition eines der aus einem feststehenden und einem beweglichen Messer bestehenden Messerpaare in der gleichen Arbeitshöhe wirksam ist.

Bei der bekannten Profil- und/oder Stab- und/oder Flachstahlschere, von der die Erfindung ausgeht (vgl. die DE-B-21 50 542), gilt, daß die Scherbewegung für alle Scherpositionen entweder vertikal verläuft (Fig. 1 der DE-B-21 50 542) oder unter einem Winkel von 45° zur Vertikalen verläuft (Fig. 4 der DE-B-21 50 542). Nun ist es vorteilhaft, mit einer Profil- und/oder Stab- und/oder Flachstahlschere sowohl vertikal als auch unter einem Winkel von 45° zur Vertikalen schneiden zu können, — vertikal z. B. zum Schneiden von Flachstahl, unter einem Winkel von 45° zur Vertikalen z. B. zum Schneiden von Profilstahl.

Im übrigen sind Profil- und/oder Stab- und/oder Flachstahlscheren mit einem — vorzugsweise aus zwei Körperplatten bestehenden — Maschinenkörper, mit zwei übereinander angeordneten feststehenden Messern, mit einem Arbeitsschlitten, mit zwei übereinander angeordneten und durch den Arbeitsschlitten beweglichen Messern und mit einer Stanze seit Jahrzehnten in vielen Ausführungsformen bekannt (vgl. z. B. die DE-C-28 38 733, die DE-C-28 38 735, die DE-A-29 40 635 und den Prospekt « MUBEA-MATIC » der Firma Muhr und Bender). Charakteristisch für diese Profil- und/oder Stab- und/oder Flachstahlscheren ist, daß sie übereinander zwei Scherstellen haben, beispielsweise eine für Profilstahl und eine für Stabstahl, eine für Profilstahl und eine für Flachstahl oder eine für Stabstahl und eine für Flachstahl. Dabei ist für beide Scherstellen nur ein Arbeitsschlitten und nur ein Antrieb vorgesehen ; der Arbeitsschlitten führt beim Scheren eine senkrechte Bewegung aus. Dabei ist es auch bekannt (vgl. die DE-C-28 38 735 und den Prospekt « MUBEA-MATIC » der Firma Muhr und Bender), den Arbeitsschlitten unter einem Winkel von 45° zur Senkrechten zu führen.

Den zuletzt beschriebenen Profil- und/oder Stab- und/oder Flachstahlscheren ist gemeinsam, daß die beiden Scherstellen nicht die gleiche Arbeitshöhe haben. Das ist insoweit nachteilig, als dadurch zu solchen Profil- und/oder Stab- und/oder Flachstahlscheren gehörende Zuführeinrichtungen relativ kompliziert sind, nämlich höhenverstellbar ausgeführt sein müssen.

Schließlich ist eine Profilstahlschere mit einem geradlinig bewegten Arbeitsschlitten sowie mehreren feststehenden und diesen paarweise zugeordneten beweglichen Messern bekannt (vgl. die DE-B- 2 220 043), bei der die feststehenden Messer und die diesen paarweise zugeordneten beweglichen Messer in einer Revolverscheibe vorgesehen sind. Die Revolverscheibe ist in ihrem Mittelpunkt drehbar. Auf einem konzentrisch zum Mittelpunkt der Revolverscheibe liegenden Kreis sind mehrfach paarweise ein feststehendes Messer und ein bewegliches Messer vorgesehen. Durch eine Drehung der Revolverscheibe um ihren Mittelpunkt kann jeweils eins der unterschiedlichen Messerpaare aktiviert werden, nämlich in den Bereich der Scherstelle gebracht werden.

Der Erfindung liegt nun die Aufgabe zugrunde, eine Profil- und/oder Stab- und/oder Flachstahlschere der eingangs beschrieben Art anzugeben, mit der sowohl vertikal als auch unter einem Winkel von 45° zur Vertikalen- oder unter einem anderen spitzen Winkel zur Vertikalen — geschnitten werden kann.

Die erfindungsgemäße Profil- und/oder Stab- und/oder Flachstahlschere, bei der die zuvor aufgezeigte Aufgabe gelöst ist, ist dadurch gekennzeichnet, daß der Scherenkörper in sich die Scherkräfte aufnimmt und um eine horizontale Schwenkachse schwenkbar ist, der Arbeitsschlitten im Scherenkörper angeordnet ist und die Messerpaare übereinander angeordnet sind.

Erfindungsgemäß ist also erkannt worden, daß zwei zunächst übereinander angeordneten Scherstellen mit einem beiden Scherstellen gemeinsamen Arbeitsschlitten dadurch die gleiche Arbeitshöhe gegeben werden kann, daß der Arbeitsschlitten um eine horizontale Schwenkachse geschwenkt wird. In der ersten Scherposition befindet sich dann die erste Scherstelle als wirksame Scherstelle in der Arbeitshöhe, während sich die zweite Scherstelle oberhalb der ersten Scherstelle befindet. Demgegenüber befindet sich in der zweiten Scherposition die zweite Scherstelle als wirksame Scherstelle in der Arbeitshöhe — und die erste Scherstelle schräg unterhalb der zweiten Scherstelle.

Im einzelnen gibt es verschiedene Möglichkeiten, die erfindungsgemäße Profil- und/oder Stab- und/oder Flachstahlschere auszugestalten und weiterzubilden. Das wird im folgenden in Verbindung mit einer Zeichnung näher erläutert. Es zeigt

Fig. 1 stark schematisiert, eine erste Ausführungsform einer erfindungsgemäßen Profil- und Flachstahlschere,

Fig. 2 in gegenüber der Fig. 1 vergrößerter Darstellung und noch stärker schematisiert, einen Ausschnitt aus der Profil- und Flachstahlschere nach Fig. 1, in der ersten Scherposition,

Fig. 3 in gegenüber der Fig. 1 vergrößerter Darstellung und noch stärker schematisiert, einen Ausschnitt aus der Profil- und Flachstahlschere nach Fig. 1, in der zweiten Scherposition, und

Fig. 4 eine zweite Ausführungsform einer erfindungsgemäßen Profil- und Flachstahlschere.

Die Figuren zeigen — als eine mögliche Ausführungsform einer Profil- und/oder Stab- und/oder Flachstahlschere — eine Profil- und Flachstahlschere mit einem Maschinenkörper 1, der aus zwei Körperplatten 2, 3 besteht, mit zwei übereinander angeordneten feststehenden Messern 4, 5, mit einem Arbeitsschlitten 6 und mit zwei übereinander angeordneten und durch den Arbeitsschlitten 6 beweglichen Messern 7, 8. Im dargestellten Ausführungsbeispiel ist noch eine weitere Funktionseinheit vorgesehen, nämlich eine Stanze 9.

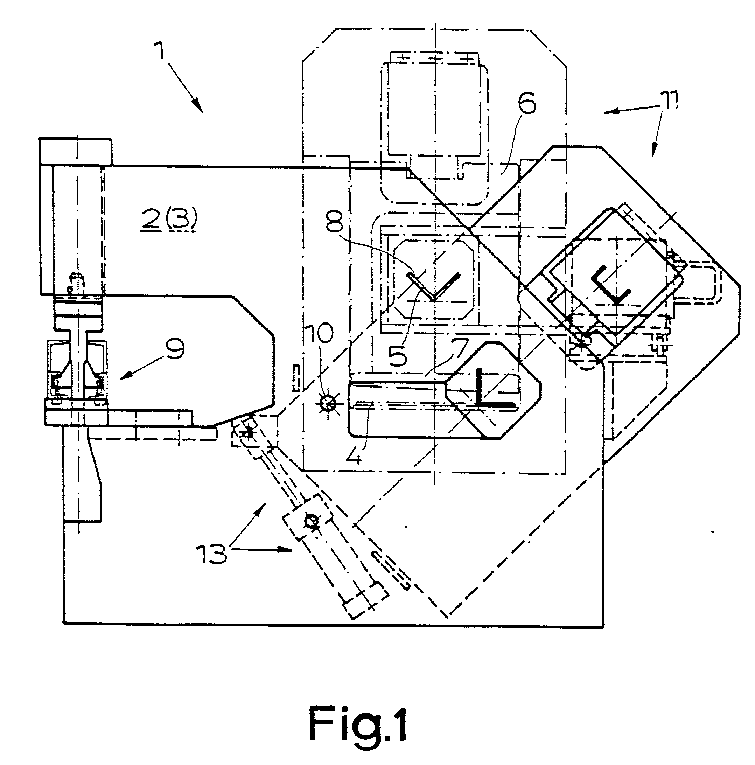

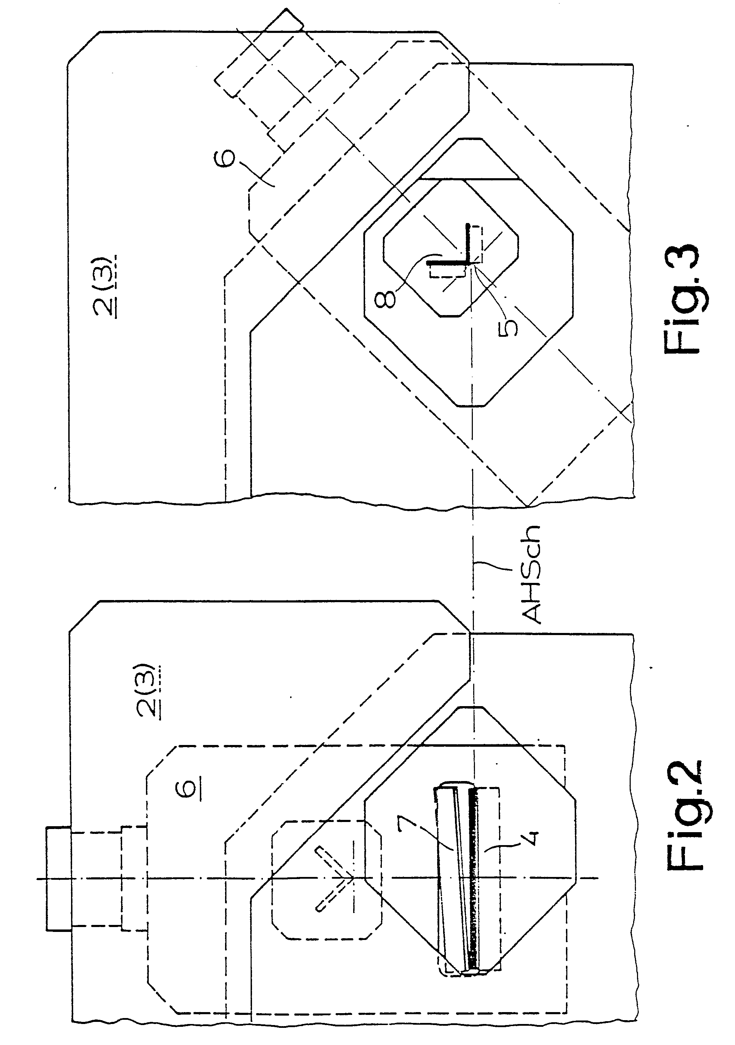

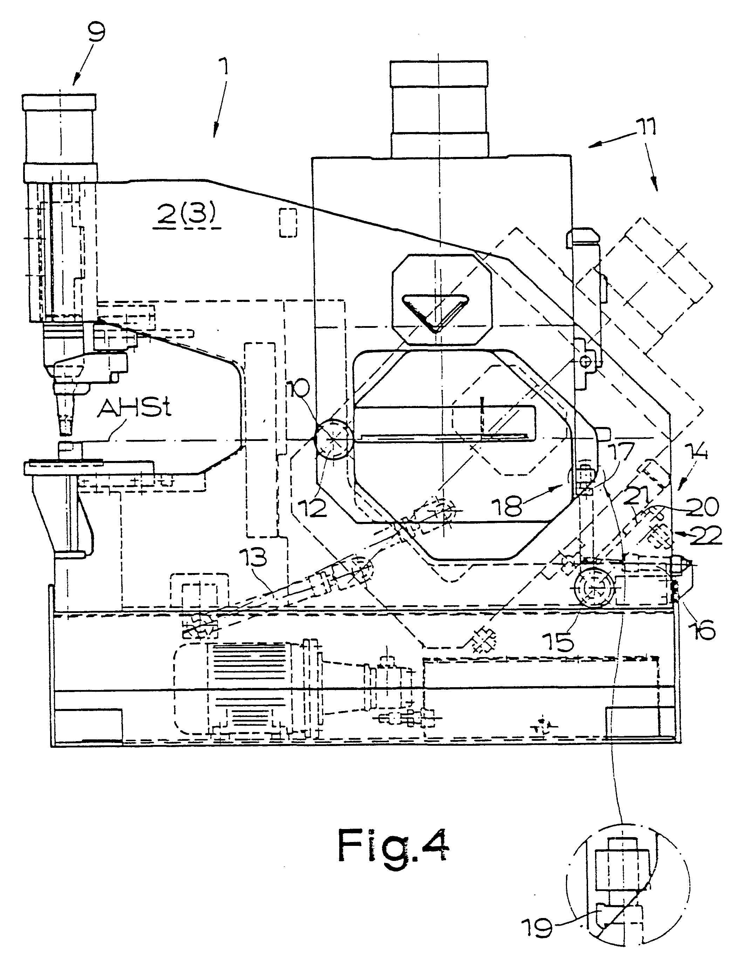

Erfindungsgemäß ist zunächst der Arbeitsschlitten 6 so um eine horizintale Schwenkachse 10 schwenkbar, daß in einer ersten Scherposition — Fig. 1, strichpunktierte Darstellung, Fig. 2 und Fig. 4, ausgezogene Darstellung das erste Messerpaar — erstes feststehendes Messer 4 und erstes bewegliches Messer 7 — in einer definierten Arbeitshöhe AHSch wirksam und in einer zweiten Scherposition — Fig. 1, ausgezogene Darstellung, Fig. 3 und Fig. 4, gestichelte Darstellung — das zweite Messerpaar — zweites feststehendes Messer 5 und zweites bewegliches Messer 8 — in der gleichen Arbeitshöhe AHSch wirksam ist. Zusätzlich zum Maschinenkörper 1 ist ein in sich die Scherkräfte aufnehmender Scherenkörper 11 vorgesehen, in dem die feststehenden Messer 4, 5 und der Arbeitsschlitten 6 mit den beweglichen Messern 7, 8 angeordnet sind. Der Scherenkörper 11 ist um die horizontale Schwenkachse 10 von der ersten Scherposition in die zweite Scherposition schwenkbar. Dabei ist der Scherenkörper 11 innerhalb des Maschinenkörpers 1, also durch die Körperplatten 2, 3 geführt, mittels eines Schwenkzapfens 12 am Maschinenkörper 1 angelenkt und mittels einer hydraulisch beaufschlagbaren Zylinder-Kolben-Anordnung 13 schwenkbar.

Denkbar wäre eine Ausführungsform der erfindungsgemäßen Profil- und/oder Stabund/oder Flachstahlschere, bei der der Scherenkörper durch einen Schwenkzapfen und eine hydraulisch beaufschlagbare Zylinder-Kolben-Anordnung in der ersten Scherposition und in der zweiten Scherposition gehalten wird. Konstruktiv ist dies jedoch keine optimale Lösung.

Bei den in den Figuren dargestellten Ausführungsbeispielen einer erfindungsgemäßen Profil- und Flachstahlschere dient die hydraulisch beaufschlagbare Zylinder-Kolben-Anordnung 13 nur der Verschwenkung des Scherenkörpers 11, nicht jedoch zu dessen Fixierung. Vielmehr ist, wie dies im einzelnen nur in Fig. 4 dargestellt ist, dem Scherenkörper 11 auf seiner der Schwenkachse 10 bzw. dem Schwenkzapfen 12 fernen Seite eine Abstützvorrichtung 14 zugeordnet. Die Abstützvorrichtung 14 ist mittels eines Schwenkzapfens 15 an den Maschinenkörper 1 angelenkt und mittels einer hydraulisch beaufschlagbaren Zylinder-KolbenAnordnung 16 schwenkbar.

Wie die Fig. 4 zeigt, weist die Abstützvorrichtung 14 zunächst einen der Abstützung des Scherenkörpers 11 in der ersten Scherposition dienenden Abstützkopf 17 auf und ist der Scherenkörper 11 mit einem dem Abstützkopf 17 der Abstützvorrichtung 14 zugeordneten Abstützanschlag 18, der einstellbar ist, versehen. Nur angedeutet ist, daß der Abstützkopf 17 der Abstützvorrichtung 14 eine Arretiernase 19 aufweist.

In der ersten Scherposition — Fig. 4, ausgezogene Darstellung — trägt der Schwenkzapfen 12 unmittelbar und der Schwenkzapfen 15 über die Abstützvorrichtung 14 den Scherenkörper 11.

Im übrigen weist die Abstützvorrichtung 14 eine der Abstützung des Scherenkörpers 11 in der zweiten Scherposition dienende Abstützfläche 20 auf und ist der Scherenkörper 11 mit einer der Abstützfläche 20 der Abstützvorrichtung 14 zugeordneten Abstützfläche 21, die ballig ausgeführt ist, versehen. Weiter weist der Maschinenkörper 1 einen der Abstützvorrichtung 14 zugeordneten einstellbaren Abstützanschlag 22 auf.

In der zweiten Scherposition — Fig. 4, gestrichelte Darstellung — wird der Scherenkörper 11 einerseits durch den Schwenkzapfen 12 und andererseits durch den Schwenkzapfen 15 und den Abstützanschlag 22 am Maschinenkörper 1 abgestützt.

Soll bei der in Fig. 4 dargestellten erfindungsgemäßen Profil- und Flachstahlschere der Scherenkörper 11 von der ersten Scherposition — ausgezogene Darstellung — in die zweite Scherposition — gestrichelte Darstellung — geschwenkt werden, so geschieht das wie folgt:

Zunächst wird der Scherenkörper 11 mit Hilfe der Zylinder-Kolben-Anordnung 13 etwas nach links geschwenkt, so daß der am Scherenkörper 11 vorgesehene Abstützanschlag 18 auf die linke Seite der Arretiernase 19 des Abstützkopfes 17 der Abstützvorrichtung 14 kommt. Dann wird mit Hilfe der Zylinder-Kolben-Anordnung 16 die Abstützvorrichtung 14 geschwenkt. Danach erfolgt das Schwenken — im Uhrzeigersinn — des Scherenkörpers 11 mit Hilfe der Zylinder-Kolben-Anordnung 13, bis der Schernkörper 11 an der Abstützvorrichtung 14 zur Anlage kommt, bis also die Abstützfläche 21 des Scherenkörpers 11 auf der Abstützfläche 20 der Abstützvorrichtung 14 aufliegt.

Dadurch, daß bei dem in Fig. 4 dargestellten Ausführungsbeispiel einer erfindungsgemäßen Profil- und Flachstahlschere der am Scherenkörper 11 vorgesehene Abstützanschlag 18 einstellbar ist, der am Maschinenkörper 1 vorgesehene Abstützanschlag 22 einstellbar ist und die am Scherenkörper 11 vorgesehene Abstützfläche 21 ballig ausgeführt ist, können Fertigungstoleranzen ohne weiteres ausgeglichen werden, kann also der Scherenkörper 11 exakt so eingestellt werden, daß der Arbeitsschlitten 6 in der ersten Scherposition eine senkrechte Bewegung und in der zweiten Scherposition eine unter einem Winkel von 45° zur Senkrechten verlaufende Bewegung ausführt.

Schließlich ist in Fig. 4 noch dargestellt, daß die Arbeitshöhe AHSt der Stanze 9 die gleich ist wie die Arbeitshöhe AHSch der Messerpaare, —

feststehendes Messer 4 und bewegliches Messer 7 in der ersten Scherposition, feststehendes Messer 5 und bewegliches Messer 8 in der zweiten Scherposition.

**Patentansprüche**

1. Profil- und/oder Stab- und/oder Flachstahlschere mit einem — vorzugsweise aus zwei Körperplatten (2, 3) bestehenden — Maschinenkörper (1), mit einem Scherenkörper (11), mit einem Arbeitsschlitten (6) mit zwei feststehenden Messern (4, 5) und mit zwei durch den Arbeitsschlitten beweglichen Messern (7, 8), wobei die feststehenden Messer und die beweglichen Messer im Scherenkörper angeordnet sind und der Scherenkörper von einer ersten Scherposition in eine zweite Scherposition derart bewegbar ist, daß in jeder Scherposition eines der aus einem feststehenden und einem beweglichen Messer bestehenden Messerpaare in der gleichen Arbeitshöhe wirksam ist, dadurch gekennzeichnet, daß der Scherenkörper (11) in sich die Scherkräfte aufnimmt und um eine horizontale Schwenkachse (10) schwenkbar ist, der Arbeitsschlitten (6) im Scherenkörper (11) angeordnet ist und die Messerpaare übereinander angeordnet sind.

2. Profil- und/oder Stab- und/oder Flachstahlschere nach Anspruch 1, dadurch gekennzeichnet, daß der Scherenkörper (11) innerhalb des Maschinenkörpers (1) geführt ist.

3. Profil- und/oder Stab- und/oder Flachstahlschere nach Anspruch 1 oder 2, dadurch gekennzeichnet, daß der Scherenkörper (11) mittels eines Schwenkzapfens (12) am Maschinenkörper (1) angelenkt ist.

4. Profil- und/oder Stab- und/oder Flachstahlschere nach einem der Ansprüche 1 bis 3, dadurch gekennzeichnet, daß der Scherenkörper (11) mittels einer hydraulisch beaufschlagbaren Zylinder-Kolben-Anordnung (13) schwenkbar ist.

5. Profil- und/oder Stab- und/oder Flachstahlschere nach einem der Ansprüche 1 bis 4, dadurch gekennzeichnet, daß dem Scherenkörper (11) auf seiner der Schwenkachse (10) fernen Seite eine Abstützvorrichtung (14) zugeordnet ist.

6. Profil- und/oder Stab- und/oder Flachstahlschere nach Anspruch 5, dadurch gekennzeichnet, daß die Abstützvorrichtung (14) mittels eines Schwenkzapfens (15) an den Maschinenkörper (1) angelenkt ist.

7. Profil- und/oder Stab- und/oder Flachstahlschere nach Anspruch 5 oder 6, dadurch gekennzeichnet, daß die Abstützvorrichtung (14) mittels einer hydraulisch beaufschlagbaren Zylinder-Kolben-Anordnung (16) schwenkbar ist.

8. Profil- und/oder Stab- und/oder Flachstahlschere nach einem der Ansprüche 5 bis 7, dadurch gekennzeichnet, daß die Abstützvorrichtung (14) einen der Abstützung des Scherenkörpers (11) in der ersten Scherposition dienenden Abstützkopf (17) aufweist.

9. Profil- und/oder Stab- und/oder Flachstahlschere nach Anspruch 8, dadurch gekennzeichnet, daß der Scherenkörper (11) einen dem Abstützkopf (17) der Abstützvorrichtung (14) zugeordneten Abstützanschlag (18) aufweist.

10. Profil- und/oder Stab- und/oder Flachstahlschere nach Anspruch 9, dadurch gekennzeichnet, daß der am Scherenkörper (11) vorgesehene Abstützanschlag (18) einstellbar ist.

11. Profil- und/oder Stab- und/oder Flachstahlschere nach einem der Ansprüche 8 bis 10, dadurch gekennzeichnet, daß der Abstützkopf (17) der Abstützvorrichtung (14) und/oder der am Scherenkörper vorgesehene Abstützanschlag eine Arretiernase (19) aufweist.

12. Profil- und/oder Stab- und/oder Flachstahlschere nach einem der Ansprüche 5 bis 11, dadurch gekennzeichnet, daß die Abstützvorrichtung (14) eine der Abstützung des Scherenkörpers (11) in der zweiten Scherposition dienende Abstützfläche (20) aufweist.

13. Profil- und/oder Stab- und/oder Flachstahlschere nach Anspruch 12, dadurch gekennzeichnet, daß der Scherenkörper (11) eine der Abstützfläche (20) der Abstützvorrichtung (14) zugeordnete Abstützfläche (21) aufweist.

14. Profil- und/oder Stab- und/oder Flachstahlschere nach Anspruch 13, dadurch gekennzeichnet, daß die am Scherenkörper (11) vorgesehene Abstützfläche (21) ballig ausgeführt ist.

15. Profil- und/oder Stab- und/oder Flachstahlschere nach einem der Ansprüche 5 bis 14, dadurch gekennzeichnet, daß der Maschinenkörper (1) einen der Abstützvorrichtung (14) zugeordneten Abstützanschlag (22) aufweist.

16. Profil- und/oder Stab- und/oder Flachstahlschere nach Anspruch 15, dadurch gekennzeichnet, daß der am Maschinenkörper (1) vorgesehene Abstützanschlag (22) einstellbar ist.

17. Profil- und/oder Stab- und/oder Flachstahlschere nach einem der Ansprüche 1 bis 16 mit einer Stanze, dadurch gekennzeichnet, daß die Arbeitshöhe (AHSt) der Stanze (9) die gleiche ist wie die Arbeitshöhe (AHSch) der Messerpaare.

**Claims**

1. A profile and/or bar and/or flat steel shearing machine with a machine frame (1) that preferably consists of two frame plates (2, 3), with a shear body (11), with an operating slider (6), with two stationary blades (4, 5) and with two blades (7, 8) movable by means of the operating slider, in which the fixed blades and the movable blades are located in the shear body and the shear body is movable from a first shearing position into a second shearing position in such a way that in each shearing position one of the pairs of blades consisting of a stationary blade and a movable blade acts at the same working level, characterized in that the shear body (11) itself receives the shearing forces and can be swivelled around a horizontal swivel axis (10), the operating slider (6) is located in the shear body (11) and the pairs of blades are located one above the other.

2. A profile and/or bar and/or flat steel shearing machine according to Claim 1, characterized in that the shear body (11) is guided inside the machine frame (1).

3. A profile and/or bar and/or flat steel shearing machine according to Claim 1 or 2, characterized in that the shear body (11) is articulated to the machine frame (1) by means of a swivel pin (12).

4. A profile and/or bar and/or flat steel shearing machine according to one of Claims 1 to 3, characterized in that the shear body (11) can be swivelled by means of a hydraulically-actuated piston cylinder device (13).

5. A profile and/or bar and/or flat steel shearing machine according to one of Claims 1 to 4, characterized in that a support mechanism (14) is associated with the shear body (11) on its side remote from the swivel axis (10).

6. A profile and/or bar and/or flat steel shearing machine according to Claim 5, characterized in that the support mechanism (14) is articulated to the machine frame (1) by means of a swivel pin (15).

7. A profile and/or bar and/or flat steel shearing machine according to Claim 5 or 6, characterized in that the support mechanism (14) can be swivelled by means of a hydraulically-actuated piston cylinder device (16).

8. A profile and/or bar and/or flat steel shearing machine according to one of Claims 5 to 7, characterized in that the support mechanism (14) possesses a support head (17) serving to support the shear body (11) in the first shearing position.

9. A profile and/or bar and/or flat steel shearing machine according to Claim 8, characterized in that the shear body (11) possesses a support buffer (18) associated with the support head (17) of the support mechanism (14).

10. A profile and/or bar and/or flat sheel shearing machine according to Claim 9, characterized in that the support buffer (18) provided on shear body (11) is adjustable.

11. A profile and/or bar and/or flat steel shearing machine according to one of Claims 8 to 10, characterized in that the support head (17) of the support mechanism (14) and/or the support buffer provided on the shear body possesses an arresting catch (19).

12. A profile and/or bar and/or flat steel shearing machine according to one of Claims 5 to 11, characterized in that the support mechanism (14) possesses a support surface (20) serving to support the shear body (11) in the second shearing position.

13. A profile and/or bar and/or flat steel shearing machine according to Claim 12, characterized in that the shear body (11) possesses a support surface (21) associated with the support surface (20) of the support mechanism (14).

14. A profile and/or bar and/or flat steel shearing machine according to Claim 13, characterized in that the support surface (21) provided on shear body (11) is of convex construction.

15. A profile and/or bar and/or flat steel shearing machine according to one of Claims 5 to 14, characterized in that the machine frame (1) possesses a support buffer (22) associated with the support mechanism (14).

16. A profile and/or bar and/or flat steel shearing machine according to Claim 15, characterized in that the support buffer (22) provided on machine frame (1) is adjustable.

17. A profile and/or bar and/or flat steel shearing machine according to one of Claims 1 to 16 with a punch, characterized in that the working level (AHSt) of the punch (9) is the same as the working levels (AHSch) of the pairs of blades.

**Revendications**

1. Cisaille à profilés et/ou à barres et/ou à acier plat avec un bâti de machine (1) — comprenant de préférence deux plaques de bâti (2, 3), avec un bâti de cisaille (11), avec une glissière de travail (6) avec deux couteaux fixes (4, 5) et deux couteaux mobiles (7, 8) actionnés par la glissière de travail, les couteaux fixes et les couteaux mobiles disposés dans le bâti de cisaille pouvant être déplacés d'une première position de cisaillement dans une deuxième position de cisaillement de telle manière que dans chaque position de cisaillement une paire de couteaux comprenant un couteau fixe et un couteau mobile, est active à la même hauteur de travail, caractérisée en ce que le bâti de cisaille (11) absorbe les efforts de cisaillement et est pivotable autour d'un axe (10), que la glissière de travail (6) est disposée dans le bâti de cisaille (11) et que les paires de couteaux sont disposées l'une au-dessus de l'autre.

2. Cisaille à profilés et/ou à barres et/ou à acier plat selon la revendication 1, caractérisée en ce que le bâti de cisaille (11) est guidé à l'intérieur du bâti de machine (1).

3. Cisaille à profilés et/ou à barres et/ou à acier plat selon la revendication 1 ou 2, caractérisée en ce que le bâti de cisaille (11) est articulé au bâti de machine (1) à l'aide d'un pivot (12).

4. Cisaille à profilés et/ou à barres et/ou à acier plat selon l'une des revendications 1 à 3, caractérisée en ce que le bâti de cisaille (11) est pivotable à l'aide d'une disposition cylindre-piston hydraulique (13).

5. Cisaille à profilés et/ou à barres et/ou à acier plat selon l'une des revendications 1 à 4, caractérisée en ce qu'au côté éloigné de l'axe de pivotement (10) du bâti de cisaille (11), un dispositif d'appui (14) a été ajouté.

6. Cisaille à profilés et/ou à barres et/ou à acier plat selon la revendication 5, caractérisée en ce que le dispositif d'appui (14) est articulé au bâti (1) à l'aide d'un pivot (15).

7. Cisaille à profilés et/ou à barres et/ou à acier plat selon la revendication 5 ou 6, caractérisée en ce que le dispositif d'appui (14) est pivotable à l'aide d'une disposition cylindre-piston hydraulique (16).

8. Cisaille à profilés et/ou à barres et/ou à acier plat selon l'une des revendications 5 à 7, caractérisée en ce que le dispositif d'appui (14) présente une tête d'appui (17) servant à l'appui du bâti de cisaille (11) dans la première position de cisaillement.

9. Cisaille à profilés et/ou à barres et/ou à acier plat selon la revendication 8, caractérisée en ce que le bâti de cisaille (11) présente un arrêt d'appui (18) ajouté à la tête d'appui (17) du dispositif d'appui (14).

10. Cisaille à profilés et/ou à barres et/ou à acier plat selon la revendication 9, caractérisée en ce que l'arrêt d'appui (18), prévu au bâti de cisaille (11), est réglable.

11. Cisaille à profilés et/ou à barres et/ou à acier plat selon l'une des revendications 8 à 10, caractérisée en ce que la tête d'appui (17) du dispositif d'appui (14) et/ou l'arrêt d'appui, prévu au bâti de cisaille, présente un talon d'arrêt (19).

12. Cisaille à profilés et/ou à barres et/ou à acier plat selon l'une des revendications 5 à 11, caractérisée en ce que le dispositif d'appui (14) présente une surface d'appui (20) servant d'appui au bâti d'appui (11) dans la deuxième position de cisaillement.

13. Cisaille à profilés et/ou à barres et/ou à acier plat selon la revendication 12, caractérisée en ce que le bâti de cisaille (11) présente une surface d'appui (21) ajoutée à la surface d'appui (20) du dispositif d'appui (14).

14. Cisaille à profilés et/ou à barres et/ou à acier plat selon la revendication 13, caractérisée en ce que la surface d'appui (21), prévue au bâti de cisaille (11), est bombée.

15. Cisaille à profilés et/ou à barres et/ou à acier plat selon l'une des revendications 5 à 14, caractérisée en ce que le bâti de machine (1) présente un arrêt d'appui (22) ajoutée au dispositif d'appui (14).

16. Cisaille à profilés et/ou à barres et/ou à acier plat selon la revendication 15, caractérisée en ce que l'arrêt d'appui (22), prévu au bâti de machine (1), est réglable.

17. Cisaille à profilés et/ou à barres et/ou à acier plat selon l'une des revendications 1 à 16 avec poinçonneuse, caractérisée en ce que la hauteur de travail (AHSt) de la poinçonneuse (9) est identique à la hauteur de travail (AHSch) des paires de couteaux.

**Fig.1**

**Fig.2**

**Fig.3**

EP 0 162 955 B1

Fig.4

3